# FASCICULE DE BREVET EUROPEEN

(11) **EP 3 393 833 B1**
(45) Date de publication et mention de la délivrance du brevet: **09.09.2020**
(21) Numéro de dépôt: 16815877.2
(22) Date de dépôt: 17.11.2016
(51) Int. Cl.: B60J 1/00

(54) **PION D'INDEXAGE D'UN VITRAGE**
INDEXIERUNGSSTIFT FÜR EINE VERGLASUNG
INDEXING PIN FOR GLAZING

(30) Priorité: 21.12.2015 FR 1562959
(43) Date de publication de la demande: 31.10.2018
(73) Titulaire: PSA AUTOMOBILES S.A., 78300 Poissy (FR)
(72) Inventeur: JAOUEN, Jean Sebastien, 91160 LONGJUMEAU (FR); PAYMAL, Richard, 78340 Les Clayes sous Bois (FR); BERTHIER, Renaud, 45300 Dadonville (FR); COENT, Jean Yves, 90300 Offemont (FR); CALCA, Fabrice, 28210 Chaudon (FR); BUSSON, Yvan, 25200 Montbeliard (FR)
(74) Mandataire: Fernandez, Francis Lionel
(86) Numéro de dépôt international: PCT/FR2016/052992
(87) Numéro de publication internationale: WO 2017/109307

(56) Documents cités:
- EP-A1- 2 226 207
- EP-A2- 2 147 813
- US-A- 5 489 135
- US-A1- 2007 063 539
- US-A1- 2008 197 657

## Description

L'invention concerne un pion d'indexage d'un vitrage sur une entrée de baie de la caisse d'un véhicule, par exemple un pare-brise.

Bien que la pose d'un vitrage sur un véhicule soit généralement effectuée, au moins en usine, par des moyens robotisés, il reste néanmoins des situations où la pose doit être effectuée de façon manuelle.

La pose manuelle peut être effectuée de différentes manières. Dans tous les cas, la principale difficulté est de positionner le vitrage dans une entrée de baie dont les dimensions sont variables en fonction des dispersions propres d'un véhicule par rapport à un autre. En ce qui concerne la pose manuelle, on utilise soit des pions d'indexage ménagés sur le vitrage soit des cales de guidage posées sur le véhicule.

La pose manuelle sans pion d'indexage n'est pas adaptée lorsque les cadences de production sont fortes. On préfère à l'heure actuelle réaliser une pose manuelle de vitrage pourvu de pions d'indexage.

Ainsi, on connaît par FR 2 927 053, un procédé de montage manuel de vitrage fait à l'aide de pions collés sur le vitrage sur une ligne haute servant de ligne de référence en géométrie, à savoir selon la ligne du pavillon. Cette ligne de pavillon délimite la partie du vitrage recouverte par le pavillon. Le pion de centrage comporte une embase par laquelle ils sont fixés sur le vitrage et une partie au moins partiellement conique destinée à être introduite dans les boutonnières ménagées sur la structure du véhicule. Un tel pion est réalisé en matière plastique par injection.

On connaît également par US 6 209 946 un pion de centrage permettant de positionner correctement un pare-brise sur un cadre de véhicule, ce pion présente une tête ou embase fixée sur le vitrage et une partie de tige allongée propre à se loger dans une ouverture du cadre. Ce pion présente un moyen de dissipation de contrainte constitué par une partie de la tige qui se cisaille transversalement notamment en cas de vibrations ou déplacements transversaux excessifs entre le vitrage et le cadre métallique une fois que le vitrage a été mis en place. On peut ainsi éviter la transmission au vitrage des contraintes de vibration et de flexion du châssis.

Le document US2008/0197657 A1 divulgue le préambule de la revendication 1.

Toutefois, de tels pions s'ils permettent de préserver le vitrage en se rompant ne permettent pas d'éviter certains inconvénients comme notamment les bruits de grincement au moment du roulage, avant même que des contraintes n'interviennent.

La présente invention a donc pour but de proposer un pion d'indexage qui permet d'éviter les inconvénients des pions d'indexage existants et notamment des bruits de grincement au roulage générés au droit des contacts du pion avec la tôle constituant la caisse d'un véhicule.

A cet effet, l'invention a pour objet un pion d'indexage comprenant une embase destinée à la fixation dudit pion sur une face d'un premier élément et une tige en saillie de ladite embase destinée à permettre l'engagement dudit pion dans une boutonnière ménagée sur un second élément, ce pion étant constitué d'une matière rigide, la tige présentant une zone destinée à venir en contact avec un bord de la boutonnière, au moins une partie de ladite zone étant pourvue d'une matière souple.

Ainsi de manière avantageuse, lorsque le pion d'indexage selon l'invention sert à la pose d'un premier élément tel qu'un vitrage sur un second élément tel qu'une entrée de baie d'une caisse de véhicule, la zone de contact pourvue d'une matière souple entre la tige et le bord de la boutonnière en tôle permet d'éviter le bruit de grincement entre la tige et la tôle qui survient au roulage lorsque le pion en matière rigide est en butée contre la tôle.

La tige présente avantageusement une section transversale de forme et dimensions correspondant à la forme et aux dimensions de la boutonnière dans laquelle le pion doit s'engager. Cette section transversale peut être de forme et dimensions constantes sur toute la longueur de la tige. Ainsi la tige peut présenter une section transversale rectangulaire, carrée ou circulaire.

On peut toutefois envisager également une forme conique de la tige, la base large du cône correspondant de préférence à la zone de contact étant de forme et dimensions complémentaires à celles de la boutonnière.

La tige comporte une partie d'extrémité et une partie de liaison avec l'embase, ladite partie de liaison présentant une matière souple au moins sur une partie de sa périphérie correspondant à la zone de contact.

Ainsi, de manière avantageuse, la zone de contact correspond à une portion de la tige proche de l'embase, ladite embase servant de butée à l'engagement du pion dans la boutonnière de sorte que le matériau souple se trouve bien en contact avec le bord de ladite boutonnière.

De préférence, la tige comprend une âme en matière rigide dont la partie correspondant à la partie d'extrémité de la tige présente des dimensions et une forme correspondant à celles de la tige tandis que la partie correspondant à la partie de liaison présente des dimensions inférieures aux dimensions de la partie d'extrémité, au moins un élément de matière souple étant rapporté sur la partie de liaison pour reconstituer la forme et les dimensions de la tige.

La partie correspondant à la partie d'extrémité de la tige présente de préférence une section transversale de dimensions et de forme correspondant à celles de la section transversale de la tige tandis que la partie de liaison présente des dimensions inférieures aux dimensions de la partie d'extrémité, au moins un élément de matière souple étant rapporté sur la partie de liaison pour reconstituer la forme et les dimensions de la section transversale de la tige.

Selon l'invention, le pion comporte une butée ménagée sur l'embase de sorte à limiter l'engagement en profondeur de la tige du pion dans la boutonnière, ladite butée venant ainsi en appui contre le second élément à savoir la tôle, pourvu de la boutonnière et ménageant entre ladite tôle et le premier élément tel que le vitrage un intervalle. Cet intervalle permet avantageusement de garantir un espace entre la tôle et le vitrage dans lequel l'écrasement du cordon de colle est garanti.

Cette butée est accolée à la partie de liaison de la tige et réalisée en la même matière souple que celle présente sur ladite partie de liaison, en particulier d'une seule pièce lors d'un surmoulage. Cette butée est ménagée de préférence de manière à s'étendre en partie en regard de la boutonnière et au-delà des bords de ladite boutonnière. Cette butée permet elle aussi de garantir contre les bruits de grincement au roulage.

La tige et l'embase sont constituées en une matière rigide, choisie parmi les matières polymères telles qu'un polyamide, tel que du PA66, chargé fibre ou non, un polyester tel que du polytéréphtalate de butylène (PBT) chargé fibre (PBT GF) ou non ; du polyéthylèneimine (PEI) chargé fibre ou non. La tige et l'embase peuvent être réalisées en une même matière et de préférence d'une pièce.

De préférence, la matière «souple» constituant les éléments rapportés et/ou la butée est choisie parmi les matières polymères telles que les élastomères thermoplastiques (TPE), les polyoléfines telles que l'éthylène-propylène-diène monomère (EPDM).

L'invention concerne également un vitrage tel qu'un pare-brise muni d'au moins un pion d'indexage selon l'invention ainsi qu'un véhicule comportant au moins un vitrage tel qu'un pare-brise monté dans une entrée de baie d'une caisse de véhicule, comprenant au moins un pion d'indexage selon l'invention.

On décrira maintenant l'invention plus en détail en référence au dessin dans lequel :
La figure 1 présente une vue en plan d'un pare-brise pourvu de deux pions de centrage selon l'invention ;
La figure 1a représente une vue agrandie de la zone A de la figure 1a ;
La figure 1b représente la vue en plan du montant de baie sur lequel est posé le vitrage ;
La figure 2a représente une vue en perspective d'une embase et d'une tige d'un pion selon l'invention à un stade de premier stade de réalisation ;
La figure 2b représente un pion selon l'invention ;
La figure 3 représente une vue en perspective d'un pion selon l'invention monté sur un montant de baie d'un véhicule.

La pose manuelle d'un pare-brise P se fait à l'aide de boutonnières B formées sur le pavillon du véhicule à chaque extrémité du montant de baie supérieur. Ces boutonnières B reçoivent des pions 1 fixés sur celle des deux faces du pare-brise P qui est destinée à être orientée vers l'intérieur du véhicule et plus particulièrement aux extrémités d'une ligne, dite ligne du pavillon. Les pions 1 comportent une embase 11 et une tige 12 et sont habituellement collés sur le pare-brise P. Toutefois, d'autres formes et fixations sont également possibles comme l'encapsulation.

En préparation de la pose d'un pare-brise P sur un véhicule, l'embase 11 de chacun des deux pions 1 présente un adhésif A ou une colle pour adhérer à la surface du pare-brise P. Elle peut aussi être par exemple encapsulée sur le pare-brise P.

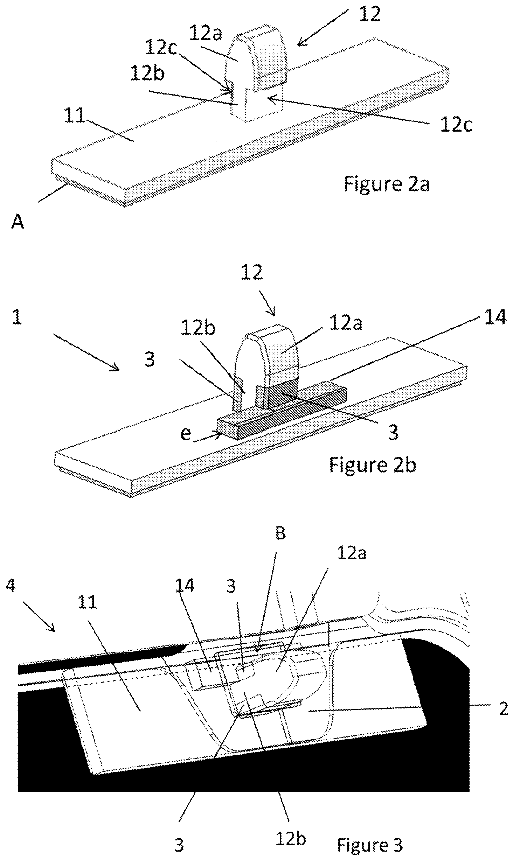

Comme on peut le voir aux figures 2a et 2b, un pion d'indexage 1 selon l'invention comporte une embase 11 de préférence de forme parallélépipédique, dans l'exemple représenté de forme rectangulaire. Depuis la face de l'embase 11 opposée à celle pourvue de l'adhésif A, s'étend en saillie la tige 12 du pion 1 qui est destinée à s'engager dans la boutonnière B.

La section transversale de la partie tige 12 est de préférence de forme complémentaire à celle de la section transversale de la boutonnière B dans laquelle doit être engagé le pion 1. Dans l'exemple choisi, la section transversale de la boutonnière B est sensiblement rectangulaire et la section transversale de la tige 12 du pion 1 est sensiblement rectangulaire et de dimensions propres à permettre l'engagement du pion dans la boutonnière B. La boutonnière d'accueil B présente des dimensions plus grandes que celles de la tige 12 du pion 1, pour éviter les contraintes de montage, le pion 1 ne faisant que de la retenue.

Une fois engagé dans la boutonnière B, le pion 1 se met en appui sur la partie inférieure de la boutonnière B (cf. figure 3). Cette position du pion 1 dans la boutonnière B donne la cote de jeu entre pavillon (en tôle ou vitré) et le vitrage lui-même (cf. figure 3).

Le positionnement latéral du vitrage P est donné par des cales de positionnement montées sur les montants de baie du véhicule et qui sont retirées une fois le vitrage posé.

Les pions 1 utilisés pour la pose du pare-brise P sont relativement longs pour permettre un guidage et notamment une mise en place sûre du pare-brise P.

Le pion 1 est constitué de deux matières, l'une que l'on qualifie de rigide constitue l'embase 11 et une partie de la tige 12 tandis qu'une matière qualifiée « douce » ou « souple » constitue au moins une partie de la tige 12, en particulier au voisinage de la zone de la tige 12 en liaison avec l'embase 11, cette zone correspondant à la zone de la tige 12 entrant en contact avec le bord de la boutonnière B lorsque le pion 1 est engagé dans ladite boutonnière B.

On évite ainsi que le contact du pion 1 en matière rigide contre le bord de la boutonnière B ne génère des bruits de grincement au roulage, perceptibles dans l'habitacle du véhicule. Le pion 1 selon l'invention propose donc de réaliser la tige 12 du pion 1 de manière à éviter ce bruit de grincement en ménageant des parties souples, non rigides en contact avec la boutonnière B.

De préférence, la matière rigide est choisie parmi les matières polymères telles qu'un polyamide, tel que du PA66, chargé fibre ou non, un polyester tel que du polytéréphtalate de butylène (PBT) chargé fibre (PBT GF) ou non; du polyéthylèneimine (PEI) chargé fibre ou non.

De préférence la matière «souple» est choisie parmi les matières polymères telles que les élastomères thermoplastiques (TPE), les polyoléfines telles que l'éthylène-propylène-diène monomère (EPDM).

Selon une forme de réalisation préférée de l'invention, le pion 1 comporte une butée 14 ménagée sur l'embase 11 et entourant une partie de la tige 12 de sorte à limiter l'engagement en profondeur de la tige 12 du pion 1 dans la boutonnière B. De cette manière, la butée 14 vient en appui contre la tôle pourvue de la boutonnière B ménageant entre ladite tôle et le vitrage P un intervalle dans lequel l'écrasement du cordon de colle est garanti.

Comme on peut le voir à la figure 2a, la section transversale de la tige 12 est sensiblement rectangulaire et la tige 12 est ménagée en saillie depuis l'embase 11 sous forme d'une seule pièce en matière rigide. Cette tige 12 comporte une âme en matière rigide qui présente une partie d'extrémité 12a permettant l'engagement dans la boutonnière B. Cette partie d'extrémité 12a présente de préférence une section transversale de forme et de dimensions correspondant à celles de la tige 12, son extrémité présentant une forme arrondie facilitant l'entrée dans la boutonnière B.

La partie de liaison 12b de l'âme de la tige 12 avec l'embase 11 présente une section transversale de dimensions réduites par rapport à la partie d'extrémité 12a de telle sorte que, dans l'exemple représenté, sur deux faces opposées de ladite tige 12, deux logements 12c sont créés. Ces logements permettent la réception de deux éléments 3 en matière souple qui viennent combler les deux logements 12c pour reconstituer la tige 12 qui présente de nouveau une section transversale uniforme.

On peut envisager que la partie de liaison 12b est réalisée de sorte que des logements sont prévus sur toutes les faces de la tige 12. Si le pion 1 est de section transversale circulaire, le diamètre de la partie 12b est alors choisi inférieur au diamètre de la partie d'extrémité 12a et un anneau de matière souple vient entourer ladite partie 12b de sorte à reconstituer la tige 12 de section transversale uniforme sur toute sa longueur.

De cette manière, la face de la partie de liaison 12b de la tige 12 qui repose contre le bord de la boutonnière B est pourvu d'un élément 3 en matière souple ce qui permet d'éviter le bruit de grincement au roulage.

La butée 14 est de préférence constituée de la même matière souple que les éléments de comblement 3 de la partie de liaison 12b de la tige 12 et est ménagée en même temps par exemple par surmoulage. Cette butée 14 s'étend le long d'une des faces de la partie 12b, de préférence celle opposée à la face de la tige 12 qui vient en appui contre le bord de la boutonnière B et présente une longueur appropriée pour venir en appui contre la tôle au-delà de la boutonnière B comme cela est visible sur la figure 3.

L'épaisseur e de la butée 14 venant en appui contre la tôle de part et d'autre de la boutonnière B permet de limiter l'engagement en profondeur du pion 1 et de ménager un intervalle équivalent à son épaisseur ce qui permet de garantir l'écrasement du cordon de colle.

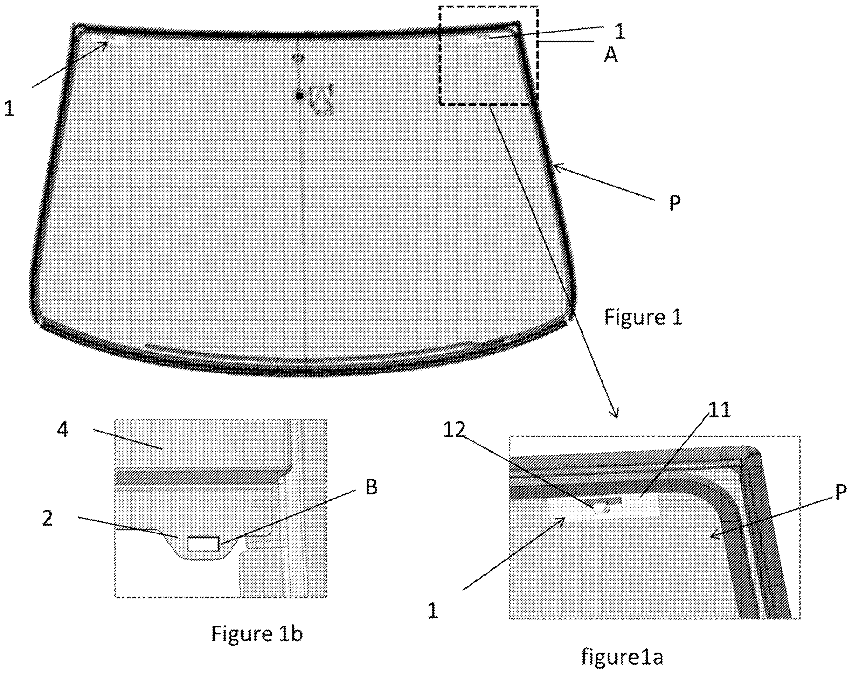

Ainsi, dans un procédé de pose manuelle d'un vitrage tel qu'un pare-brise P, on met en place aux deux extrémités supérieures d'un pare-brise B deux pions 1 pourvus d'un adhésif A sur la face de l'embase 11 du pion opposée à la face présentant la tige 12 (cf. figure 1). L'opérateur positionne ensuite les pions 1 dans les boutonnières B ménagées sur le montant de baie, sur des pattes 2 en excroissance du pavillon 4 du véhicule et ménagées à chaque extrémité de la baie.

Les pions 1 engagés dans les boutonnières B agissent principalement en retenue du vitrage P sur le véhicule et le positionnement en latéral du vitrage P est réalisé à l'aide de cales de positionnement mises en place sur les montants de baie latéraux. On peut prévoir également des cales de pré-positionnement placées sur la ligne du pavillon 4.

L'invention propose donc un pion qui remplit trois fonctions pour un vitrage posé en manuel : l'indexage de position, la butée de calage en profondeur (garantissant l'écrasement du cordon de colle) et une fonction anti bruit de grincement en roulage.

## Revendications

1. Pion d'indexage (1) comprenant une embase (11) destinée à la fixation dudit pion (1) sur une face d'un premier élément (P) et une tige (12) en saillie de ladite embase (11) destinée à permettre l'engagement dudit pion (1) dans une boutonnière (B) ménagée sur un second élément (4), ledit pion (1) étant constitué notamment d'une matière rigide, la tige (12) présentant une zone destinée à venir en contact avec un bord de la boutonnière (B), au moins une partie de ladite zone étant pourvue d'une matière souple, la tige (12) comportant une partie d'extrémité libre (12a) et une partie de liaison (12b) avec l'embase (11), ladite partie de liaison (12b) présentant une matière souple (3) au moins sur une partie de sa périphérie correspondant à la zone de contact, **caractérisé en ce qu'**il comporte une butée (14) ménagée sur l'embase (11) de sorte à limiter l'engagement en profondeur de la tige (12) du pion (1) dans la boutonnière (B), ladite butée (14) étant destinée à venir en appui contre le second élément (4) pourvu de la boutonnière et à ménager entre ledit second élément (4) et le premier élément (P) un intervalle, cette butée (14) étant accolée à la partie de liaison (12b) de la tige (12) et réalisée en la même matière souple que celle des éléments (3) présents sur ladite partie de liaison (12b).

2. Pion d'indexage selon la revendication 1, **caractérisé en ce que** la butée est ménagée de manière à s'étendre en regard de la boutonnière (B) et au-delà des bords de ladite boutonnière (B)

3. Pion d'indexage (1) selon la revendication 1 ou 2, **caractérisé en ce que** la tige (12) comprend une âme en matière rigide dont la partie correspondant à la partie d'extrémité (12a) de la tige (12) présente des dimensions et une forme correspondant à celles de la tige (12) tandis que la partie correspondant à la partie de liaison (12b) présente des dimensions inférieures aux dimensions de la partie d'extrémité (12a), au moins un élément de matière souple (3) étant rapporté sur la partie de liaison (12b) pour reconstituer la forme et les dimensions de la tige (12)

4. Pion d'indexage (1) selon l'une des revendications 1 à 3, **caractérisé en ce que** la tige (12) et l'embase (11) sont constituées en une matière rigide, choisie parmi les matières polymères telles qu'un polyamide, tel que du PA66, chargé fibre ou non, un polyester tel que du polytéréphtalate de butylène (PBT) chargé fibre (PBT GF) ou non ; du polyéthylèneimine (PEI) chargé fibre ou non.

5. Pion d'indexage (1) selon l'une des revendications 1 à 4, **caractérisé en ce que** la matière souple est choisie parmi les matières polymères telles que les élastomères thermoplastiques (TPE), les polyoléfines telles que de l'éthylène-propylène-diène monomère (EPDM).

6. Vitrage tel qu'un pare-brise destiné à être monté dans une entrée de baie d'une caisse de véhicule, comprenant au moins un pion d'indexage selon l'une des revendications 1 à 5.

7. Véhicule comportant au moins un vitrage tel qu'un pare-brise monté dans une entrée de baie d'une caisse de véhicule, comprenant au moins un pion d'indexage selon l'une des revendications 1 à 5.

## Patentansprüche

1. Indexierstift (1) mit einer Basis (11) zum Befestigen des Stiftes (1) an einer Fläche eines ersten Elementes (P) und einer Stange (12), die von der Basis (11) vorsteht, um den Eingriff des Stiftes (1) in ein in einem zweiten Element (4) ausgebildetes Knopfloch (B) zu ermöglichen, wobei die Nadel (1) insbesondere aus einem starren Material hergestellt ist, wobei der Stange (12) einen Bereich aufweist, der dazu bestimmt ist, mit einem Rand des Knopflochs (B) in Kontakt zu kommen, wobei mindestens ein Teil dieses Bereichs mit einem flexiblen Material versehen ist, wobei der Stange (12) einen freien Endabschnitt (12a) und einen Verbindungsabschnitt (12b) mit der Basis (11) aufweist, wobei das Verbindungsteil (12b) zumindest auf einem Teil seines Umfangs, der der Kontaktzone entspricht, ein flexibles Material (3) aufweist, **dadurch gekennzeichnet, dass** es einen Anschlag (14) aufweist, der an der Basis (11) vorgesehen ist, um das tiefe Eingreifen des Stange (12) der Nadel (1) in das Knopfloch (B) zu begrenzen, wobei der Anschlag (14) dazu bestimmt ist, sich gegen das zweite mit dem Knopfloch versehene Element (4) abzustützen und einen Zwischenraum zwischen dem zweiten Element (4) und dem ersten Element (P) zu bilden, wobei dieser Anschlag (14) mit dem Verbindungsteil (12b) der Stange (12) verbunden ist und aus demselben flexiblen Material wie die auf dem Verbindungsteil (12b) vorhandenen Elemente (3) besteht.

2. Indexierstift nach Anspruch 1, **dadurch gekennzeichnet, dass** der Anschlag so angeordnet ist, dass er sich gegenüber dem Knopfloch (B) und über die Ränder des Knopflochs (B) hinaus erstreckt.

3. Indexierstift (1) nach Anspruch 1 oder 2, **dadurch gekennzeichnet, dass** der Stange (12) einen Kern aus starrem Material umfasst, wobei der dem Endteil (12a) des Stange (12) entsprechende Teil Abmessungen und eine Form aufweist, die denen des Stange (12) entsprechen, während der dem Verbindungsteil (12b) entsprechende Teil Abmessungen aufweist, die kleiner sind als die Abmessungen des Endteils (12a), mindestens ein Element (3) aus flexiblem Material, das an dem Verbindungsteil (12b) befestigt ist, um die Form und die Abmessungen des Stange (12) zu rekonstruieren

4. Indexierstift (1) nach einem der Ansprüche 1 bis 3, **dadurch gekennzeichnet, dass** der Stange (12) und die Basis (11) aus einem steifen Material bestehen, ausgewählt aus Polymermaterialien wie einem Polyamid, wie PA66, fasergefüllt oder nicht fasergefüllt, einem Polyester, wie Polybutylenterephthalat (PBT), fasergefüllt oder nicht fasergefüllt (PBT GF); Polyethylenimin (PEI), fasergefüllt oder nicht fasergefüllt.

5. Indexierstift (1) nach einem der Ansprüche 1 bis 4, **dadurch gekennzeichnet, dass** das flexible Material aus polymeren Materialien wie thermoplastischen Elastomeren (TPE), Polyolefinen wie Ethylen-Propylen-Dien-Monomer (EPDM) ausgewählt ist.

6. Verglasung, wie z.B. eine Windschutzscheibe, die dazu bestimmt ist, in einem Fenstereingang einer Fahrzeugkarosserie montiert zu werden, mit mindestens einem Indexierstift nach einem der Ansprüche 1 bis 5.

7. Fahrzeug mit mindestens einer Verglasung, wie z.B. einer Windschutzscheibe, die in einer Einstiegsöffnung einer Fahrzeugkarosserie montiert ist, mit mindestens einem Indexierstift nach einem der Ansprüche 1 bis 5.

## Claims

1. An indexing pin (1) comprising a base (11) for fixing said pin (1) to a face of a first element (P) and a rod (12) projecting from said base (11) for enabling said pin (1) to be engaged in a buttonhole (B) formed in a second element (4), said pin (1) being made in particular of a rigid material, the rod (12) having a zone intended to come into contact with an edge of the buttonhole (B), at least part of said zone being provided with a flexible material, the rod (12) comprising a free end portion (12a) and a portion (12b) for connection (12b) with the base (11), said connecting part (12b) having a flexible material (3) at least on a part of its periphery corresponding to the contact zone, **characterized in that** it comprises a stop (14) provided on the base (11) so as to limit the deep engagement of the rod (12) of the pin (1) in the buttonhole (B), said abutment (14) being intended to bear against the second element (4) provided with the buttonhole and to form a gap between said second element (4) and the first element (P), this abutment (14) being attached to the connecting part (12b) of the rod (12) and made of the same flexible material as that of the elements (3) present on said connecting part (12b).

2. Indexing pin according to claim 1, **characterised in that** the stop is arranged so as to extend opposite the buttonhole (B) and beyond the edges of said buttonhole (B).

3. Indexing pin (1) according to claim 1 or 2, **characterised in that** the rod (12) comprises a core of rigid material, the part corresponding to the end part (12a) of the rod (12) having dimensions and a shape corresponding to those of the rod (12), while the part corresponding to the connecting part (12b) has dimensions smaller than the dimensions of the end part (12a), at least one flexible material element (3) being attached to the connecting part (12b) to reconstruct the shape and dimensions of the rod (12)

4. Indexing pin (1) according to one of claims 1 to 3, **characterized in that** the rod (12) and the base (11) are made of a rigid material, selected from polymeric materials such as a polyamide, such as PA66, whether or not fibre-filled, a polyester such as polybutylene terephthalate (PBT) whether or not fibre-filled (PBT GF); polyethyleneimine (PEI) whether or not fibre-filled.

5. Indexing pin (1) according to one of claims 1 to 4, **characterized in that** the flexible material is chosen from polymeric materials such as thermoplastic elastomers (TPE), polyolefins such as ethylene-propylene-diene monomer (EPDM).

6. Glazing such as a windscreen intended to be mounted in a window entrance of a vehicle body, comprising at least one indexing pin according to one of claims 1 to 5.

7. Vehicle comprising at least one glazing such as a windscreen mounted in an entrance opening of a vehicle body, comprising at least one indexing pin according to one of claims 1 to 5.
